(19) **Europäisches Patentamt**
**European Patent Office**
**Office européen des brevets**

(11) **EP 3 109 794 A1**

(12) **EUROPEAN PATENT APPLICATION**

(43) Date of publication:
**28.12.2016 Bulletin 2016/52**

(51) Int Cl.:
***G06K 9/00*** *(2006.01)*

(21) Application number: **16164100.6**

(22) Date of filing: **06.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.06.2015 KR 20150090906**

(71) Applicant: **Samsung Electronics Co., Ltd. Gyeonggi-do 16677 (KR)**

(72) Inventor: **HAN, Jeong-ho Seoul (KR)**

(74) Representative: **Appleyard Lees IP LLP 15 Clare Road Halifax HX1 2HY (GB)**

(54) **SYSTEM, APPARATUS, METHOD, AND COMPUTER READABLE STORAGE MEDIUM FOR EXTRACTING INFORMATION**

(57) System, apparatus, method, and computer readable storage medium for extracting information.

An information extracting system, an information extracting apparatus, a method for extracting information, and a non-transitory computer readable recording medium are provided. The information extracting system according to an embodiment includes a plurality of photographing apparatuses, an information extracting apparatus configured to extract information on objects included in a plurality of single images photographed by the plurality of photographing apparatuses, and a server configured to receive and store feature information on the objects from the information extracting apparatus. The information extracting apparatus generates a composite image by compositing the plurality of single images received from the plurality of photographing apparatuses, detects the objects included in the plurality of single images, extracts feature information on each of the objects, tracks a position of each of the objects in the composite image, and generates object information on the objects by using the feature information and the position of each of the objects.

## FIG. 1

1000

200

300

100

**Description**

CROSS-REFERENCE TO RELATED APPLICATION

This application claims the benefit of priority under 35 U.S.C. § 119 from Korean Patent Application No. 10-2015-0090906, filed on June 26, 2015, in the Korean Intellectual Property Office, the disclosure of which is incorporated herein by reference in its entirety.

BACKGROUND

**1. Field**

Methods and apparatuses consistent with exemplary embodiments of the present application relate to an information extracting system, an information extracting apparatus, a method for extracting information, and a non-transitory computer readable recording medium, and more particularly, to an information extracting system which recognizes objects in a plurality of images and extract information about the objects, an information extracting apparatus, a method for extracting information, and a non-transitory computer readable recording medium.

**2. Description of the Related Art**

Image recognition technology allows one to extract information about a person from a photographic image. For example, the method may be applied to digital signage to provide a user with an advertisement specialized for the user or applied to a security system to sense an abnormal activity.

In single-camera solutions, typically a wide-angle camera has been used to maximize the field of view used in image recognition. However, in such cases, image distortion may occur during the process of correcting the wide angle, and the distortion may become more intense toward the edges of the image. Accordingly, using an image from a single camera source tends to deteriorate recognition performance.

In multi-camera solutions, the performance of a matching algorithm that is applied to an array of the cameras may suffer unless the images share overlapping areas. According to this method, when a person in one image disappears and then appears in an adjacent image within a certain time window, it may be determined that the people in the images are in fact the same person based on a positional relation of the arrayed cameras. Thus, the performance of this method may deteriorate as the number of duplicate people increases, depending upon an array of the cameras and conditions. In addition, various limitations may also be present in terms of usability of this technology.

Meanwhile, when the images of the plurality of cameras share one or more overlapping portions, it is possible to combine the disparate images into one composite image and extract user information from the image. It may also be possible to extract user information from respective images and determine whether people in the respective images are the same person based on a relative positional relation of the cameras.

When analyzing one composite image, it may be comparatively easy to track the recognized people or count the number of detected people. However, the image distortion may still occur while the images received from multiple cameras are composited into one image, thereby deteriorating the recognition performance of image recognition based on machine learning. Accordingly, the performance in sensing positions of the people or extracting information from the sensed people may also suffer.

By analyzing respective images, undistorted camera images may be used. Accordingly, the recognition performance does not suffer much even in the learning-based recognizer. However, this method requires determining whether people detected from the respective images are the same person, integrating information about the detected people, and converting the integrated information into each result detected by individual recognizers. In addition, when a large number of people are present in the overlapping portions of the respective images or people move at high speed in the overlapping portions of the images, the error rate may increase considerably in the operation of determining whether the people detected in multiple images are the same persons.

SUMMARY

The present disclosure has been provided to address the aforementioned and other problems and disadvantages occurring in the related art, and an aspect of the present disclosure provides an information extracting system which is capable of extracting object information with high accuracy and fidelity, and reducing deterioration of the recognition performance when using images obtained from multiple cameras to increase the size of a recognition area. An information extracting apparatus and a method for extracting information are also disclosed.

According to an aspect of an exemplary embodiment, there is provided an information extracting system. The system may include a plurality of photographing apparatuses, an information extracting apparatus, and a server. The information extracting apparatus may be configured to extract information on objects included in a plurality of single images respectively photographed by the plurality of photographing apparatuses. The server may be configured to receive and store feature information on the objects from the information extracting apparatus. The information extracting apparatus may generate a composite image by compositing the plurality of single images received from the plurality of photographing apparatuses, detect the objects included in the plurality of single images, extract feature information on each of the detected objects, track a position of each of the detected objects in the composite image, and generate object information on the objects by using the extracted feature information and the tracked position of each of the objects.

According to an aspect of an exemplary embodiment, there is provided an information extracting apparatus. The apparatus may include a communicator configured to receive a plurality of single images, an image compositor configured to generate a composite image by compositing the plurality of single images, an object detector configured to detect objects included in the plurality of single images and extract feature information on the detected objects, an object tracker configured to track, in the composite image, respective positions of the detected objects, and an information generator configured to generate object information on the objects by using the extracted feature information and respective positions of the objects.

The image compositor may generate a mapping table for storing a corresponding relation between a first pixel position in the plurality of single images and a second pixel position in the composite image.

The mapping table may convert a group of pixels associated with each of the objects into a pixel area, and the mapping table may store a corresponding relation between a first pixel area in the plurality of single images and a second pixel area in the composite image.

The object tracker may convert position information on the objects detected in the plurality of single images into position information in the stitched image by using the mapping table and track the objects by using the converted position information.

The object detector may obtain current positions of the objects in the plurality of single images by converting, via the mapping table, the respective positions of the objects in the composite image. The object tracker may correct position information of the objects in the composite image by using the detected current positions of the objects in the plurality of single images and the mapping table.

The object tracker may correct the position information in the composite image at predetermined time intervals.

The object detector may convert first position information on the objects being tracked in the composite image into second position information in the plurality of single images by using the mapping table, and extract feature information on the objects by using the second position information.

The feature information may include at least one of a gaze direction, an age, a gender, a race, an ethnicity, an emotion, a shape, a color, a size, and a speed of the objects.

The communicator may transmit the generated object information to an external apparatus at predetermined time intervals.

According to an aspect of an exemplary embodiment, there is provided a method for extracting information with an information extracting apparatus. The method may include receiving a plurality of single images, generating a composite image by compositing the plurality of single images, detecting an object included in the plurality of single images, tracking a position of the object in the composite image, extracting feature information on the object from the plurality of single images, and generating object information on the object by using the feature information and the position of the object.

The method may further include generating a mapping table for storing a corresponding relation between a first pixel position in the plurality of single images and a second pixel position in the composite image.

The mapping table may convert a group of pixels associated with the object into a pixel area, and the mapping table may store a corresponding relation between a first pixel area in the plurality of single images and a second pixel area in the composite image.

The tracking may include converting first position information of the object in the plurality of single images into second position information in the composite image by using the mapping table, and tracking the object by using the second position information.

The method may further include detecting a current position of the object in the plurality of single images by converting, via the mapping table, position information of the object in the composite image, and correcting the position information in the composite image by using the current position of the object in the plurality of single images and the mapping table.

The correcting may include correcting the position information in the composite image at predetermined time intervals.

The extracting may include converting first position information on the object in the composite image into second position information in the plurality of single images by using the mapping table, and extracting feature information on the object by using the second position information.

The feature information may include at least one of a gaze direction, an age, a gender, a race, an ethnicity, an emotion, a shape, a color, a size, and a speed of the object.

The method may further include transmitting the generated object information to an external apparatus at predetermined time intervals.

The plurality of single images may be received from a plurality of photographing apparatuses that are tilted towards each other and create overlapping fields of view.

According to an aspect of an exemplary embodiment, there is provided a non-transitory computer readable recording medium storing instructions for executing a method for extracting information of an information extracting apparatus. The method may include receiving a plurality of single images, generating a composite image by compositing the plurality of single images, detecting an object included in the plurality of single images, tracking a position of the detected object in the composite image, extracting feature information on the object from the plurality of single images, and generating object information on the object by using the feature information and the position of the object.

According to the various aspects of embodiments discussed above, it is possible to track objects with high accuracy even when the objects move at a high speed in the overlapping portions of a plurality of images or a large number of objects are present in the overlapping portion.

BRIEF DESCRIPTION OF THE DRAWINGS

The above and/or other aspects of the present inventive concept will be more apparent by describing certain embodiments of the present inventive concept with reference to the accompanying drawings, in which:

FIG. 1 is an illustration of an information extracting system according to an embodiment of the present disclosure;

FIG. 2 is a schematic block diagram illustrating a structure of an information extracting apparatus according to an embodiment of the present disclosure;

FIG. 3 is a detailed block diagram illustrating a structure of an information extracting apparatus according to an embodiment of the present disclosure;

FIG. 4A and 4B are illustrations of arraying a plurality of photographing apparatuses such that photographed images overlap each other;

FIG. 5 is a block diagram illustrating an operation of an information extracting apparatus according to an embodiment of the present disclosure;

FIG. 6 is an illustration of a corresponding relation between pixels of a single image and pixels of a composite image;

FIGS. 7A and 7B are illustrations of mapping tables according to various embodiments of the present disclosure;

FIG. 8 is a block diagram illustrating an operation of detecting a new object in single image;

FIG. 9 is a block diagram illustrating an operation of correcting position information on an object which is being tracked in a composite image by using position information in a single image;

FIG. 10 is a block diagram illustrating an operation of extracting feature information regarding an object; and

FIG. 11 is a flowchart provided to describe a method for extracting information of an information extracting apparatus according to an embodiment of the present disclosure.

DETAILED DESCRIPTION OF THE PREFERRED EMBODIMENT

Certain embodiments are described in greater detail below with reference to the accompanying drawings. In the following description, like drawing reference numerals are used for the like elements, even in different drawings. The matters defined in the description, such as detailed construction and elements, are provided to assist in a comprehensive understanding of embodiments. However, embodiments can be practiced without those specifically defined matters. Also, well-known functions or constructions are not described in detail because they would obscure the application with unnecessary detail.

The terms "first," "second," etc. may be used to describe diverse components, but the components are not limited by the terms. The terms are only used to distinguish one component from the others and not necessarily to establish temporal, ordinal, or spatial relationships among the components.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

The word "exemplary" is used herein to mean "serving as an example or illustration." Any aspect or design described herein as "exemplary" is not necessarily to be construed as preferred or advantageous over other aspects or designs. Moreover, claim language reciting "at least one of" a set indicates that one member of the set or multiple members of the set satisfy the claim.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

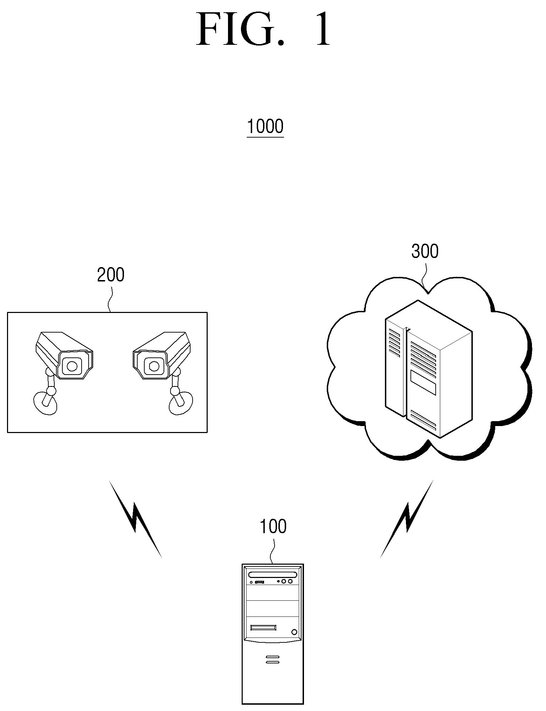

FIG. 1 is an illustration of an information extracting system 1000 according to an aspect of an exemplary embodiment. As illustrated in FIG. 1, the information extracting system 1000 may include an information extracting apparatus 100, a plurality of photographing apparatuses 200, and a server 300.

The information extracting apparatus 100 may extract information on objects included in images photographed by the plurality of photographing apparatuses 200. Subsequently, the information extracting apparatus 100 may detect the objects included in the respective single images by analyzing each of the plurality of single images. In addition, the information extracting apparatus 100 may extract feature information on each of the objects detected from the single images. Because single images are free of image distortion that may result from stitching images, the information extracting apparatus 100 may enhance performance in detecting an object and extracting the feature information about the object.

The information extracting apparatus 100 may generate a stitched or composite image by stitching the plurality of single images received from the plurality of photographing apparatuses 200. Subsequently, the information extracting apparatus 100 may track a position of the objects detected from the plurality of single images in the composite image. The information extracting apparatus 100 may reduce errors associated with tracking and counting the number of objects found in a composite image.

That is, the information extracting apparatus 100 may detect the objects, track the objects, and extract feature information on the objects in an image suitable for each operation by consulting correlation between pixels of the plurality of single images and pixels of the composite image. Accordingly, the information extracting apparatus 100 may combine the advantages associated with using a plurality of single images and using a composite image. The plurality of photographing apparatuses 200 may be one or more devices equipped with an image capturing module, such as a still camera, a video camera, a charged coupled device (CCD) camera, a mobile device equipped with a camera, a camera mounted on a digital signage, a webcam, a closed circuit television (CCTV), and the like. In addition, the plurality of photographing apparatuses 200 may be combined with the information extracting apparatus 100 in a single device or housing.

The server 300 may receive and store feature information and position information on the various objects identified or recognized by the information extracting apparatus 100. Based on the object information received, the server 300 may generate information associated with objects or people that traverse a location or area where the images were photographed. In addition, the server 300 may transmit the generated information to a display apparatus located at the area where the images were photographed (for example, a big-screen television, a digital signage, and the like). According to an aspect of an exemplary embodiment, in response to a display being mounted on the information extracting apparatus 100, the information extracting apparatus 100 may generate and display pertinent information.

According to the above-described embodiments, the information extracting system 1000 may detect the objects accurately, track the objects, and extract information on the objects, while maintaining a wide recognition area. The recognition area refers to an area or location that is monitored by the information extracting system 1000 to detect objects.

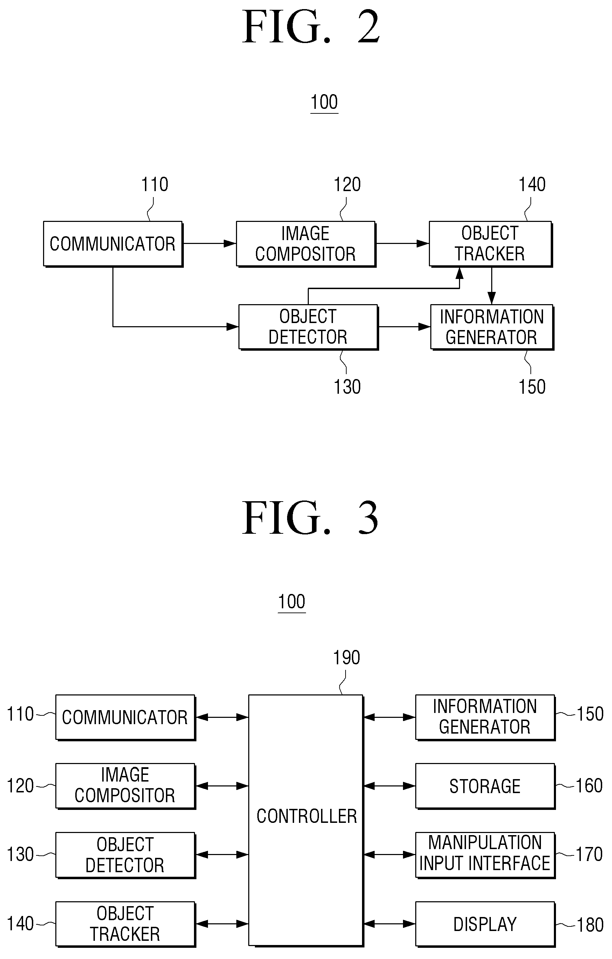

A detailed structure of the information extracting apparatus 100 will be described below with reference to FIGS. 2 and 3.

FIG. 2 is a schematic block diagram illustrating a structure of an information extracting apparatus 100 according to an aspect of an exemplary embodiment. Referring to FIG. 2, the information extracting apparatus 100 may include a communicator 110, an image compositor 120, an object detector 130, an object tracker 140, and an information generator 150.

The communicator 110 may communicate with an external apparatus. For example, the communicator 110 may receive a plurality of single images. In addition, the communicator 110 may transmit information on extracted objects to the external apparatus. The communicator 110 may transmit information on the objects to the external apparatus in response to a user request or at regular or semi-regular intervals based on a predetermined reporting cycle.

The image compositor 120 may generate a composite image by digitally stitching together the plurality of received single images. The image compositor 120 may generate a mapping table for storing corresponding relations between the pixel positions of the plurality of single images and the pixel positions of the stitched image. Based on the corresponding relations of pixel positions stored in the mapping table, information on the operations performed in the pixels of the plurality of single images may be applicable to the corresponding pixels in the composite image and vice versa.

The object detector 130 may detect objects that are depicted in the plurality of single images. The objects may include people or other living beings. In addition, the object detector 130 may determine whether objects are present in the respective single images. Once the object detector 130 determines that a given object is present in one of the single images, the object detector 130 may converts the position information regarding the object into position information in the composite image by using the mapping table. Subsequently, the object detector 130 may transmit the converted position information to the object tracker 140.

In addition, the object detector 130 may extract feature information on each of the objects by analyzing the single images. For example, extracting the objects' feature information may be performed by another chip. In addition, the object detector 130 may perform better on the single images rather than the composite image.

Moreover, the object tracker 140 may track positions of the detected objects within the composite image. In order to reduce the amount of computation required, the object tracker 140 may track the positions of the objects in the composite image by using a pattern matching algorithm or an optical flow detection unit. The object tracker 140 may, on a regular basis, correct any discrepancies in the position information that may accumulate over time by using the single images.

The information generator 150 may generate object information on the detected objects by using the extracted feature information and the tracked position information regarding the objects. For example, the object information may include a eye-gaze direction, an age, a gender, a race, an ethnicity, an emotion, an attention time, a dwell time (i.e., a time spent staying at a recognition area), an object type, a shape, a color, a size, a speed, etc. associated with an object.

FIG. 3 is a detailed block diagram illustrating a structure of an information extracting apparatus 100 according to an aspect of an exemplary embodiment. Referring to FIG. 3, the information extracting apparatus 100 may include a communicator 110, an image compositor 120, an object detector 130, an object tracker 140, an information generator 150, a storage 160, a manipulation input interface 170, a display 180 , and a controller 190.

The communicator 110 may communicate with an external apparatus. The communicator 110 may include a wireless communication module and/or a wired communication module to communicate with a photographing apparatus 200 via wired and/or wireless communication. In particular, the communicator 110 may receive a plurality of single images and transmit extracted object information.

The communicator 110 may communicate via a wired communication method, such as, High-Definition Multimedia Interface (HDMI), Universal Serial Bus (USB), Institute of Electrical and Electronics Engineers (IEEE) 1394, low-voltage differential signaling (LVDS), local area network (LAN), and the like. In addition, the communicator 110 may communicate via one of wireless communication methods, such as, near field communication (NFC), wireless LAN, infrared (IR) communication, Zigbee communication, Wi-Fi, Bluetooth, and the like. The communicator 110 may communicate according to the above-described various wired and/or wireless communication methods, but not limited thereto.

The image compositor 120 may generate a composite image by logically or digitally stitching together the plurality of single images. In order for the image compositor 120 to generate the composite image, the plurality of single images may need to share one or overlapping portions. A ratio of the overlapping portions compared to the entire image area may vary and is not limited to a particular ratio. For example, the image compositor 120 may generate a composite image by using a plurality of single images that have 25-30 % of their image areas overlapping with at least one other image. However, the overlapping ratio can be higher or lower than the suggested exemplary ratios.

The image compositor 120 may generate a mapping table for storing a corresponding relation or correlation between a pixel position in the plurality of single images and a pixel position in the composite image. Based on the corresponding relations of pixel positions stored in the mapping table, information on the operations performed in the pixels of the plurality of single images may be applicable to the corresponding pixels in the composite image and vice versa. Once the mapping table is generated, updating the composite image with a next input image frame by the image compositor 120 may incur less computational cost because previous computations may not need to be repeated.

The image compositor 120 may store a corresponding relation between coordinate values or index values of respective pixels in the mapping table. In other words, the mapping table may store data relating to the spatial correspondence between various pixels in the single images and their corresponding pixels in the composite image. The image compositor 120 may also convert an area where the pixels are distributed into a rectangular area to generate the mapping table. The image compositor 120 may reduce an amount of data to be compared when the image compositor 120 converts information into position information in another image by using the information converted into the rectangular area.

If the image compositor 120 fails to generate the mapping table, the image compositor 120 may repeat the process of generating the mapping table until a normal composite image is generated. If the mapping table is successfully generated, the image compositor 120 may detect and track objects and extract feature information about the objects found in the latest input image frame.

The object detector 130 may detect objects included in the plurality of single images. The object detector 130 determines whether the objects are present in the respective single images. When the objects are present in the respective single images, the object detector 130 may convert position information of the objects into position information of the composite image by looking up the mapping table. Subsequently, the object detector 130 may transmit the converted position information to the object tracker 140.

The object detector 130 may convert the position information of the objects being tracked in the composite image into position information of the single images by using the mapping table. Accordingly, the object detector 130 may determine a current position of the tracked objects in the single images. The object detector 130 may transmit the current position of the objects in the single images to the object tracker 140 to correct the position information of the objects in the composite image.

The object detector 130 may extract feature information about each of the objects by analyzing the single images.

The object tracker 140 may track the positions of the detected objects in the composite image. The object tracker 140 may track the positions of the objects by using various methods including pattern matching and the like.

The object tracker 140 may convert the position information of the objects detected in the single images into position information in the composite image by using the mapping table. Subsequently, the object tracker 140 may track the objects in the composite image by using the converted position information.

By tracking the objects in the composite image, it is possible to count the number of objects more accurately and reduce the computation required for determining whether the objects in the composite image are the same objects from the plurality of single images.

On a regular basis, the object tracker 140 may make corrections to the position information by using the single images if necessary. The object tracker 140 may obtain information about the current positions of the objects in the composite image by converting the current position information on the objects in the single images through the mapping table. Accordingly, the object tracker 140 may remove any discrepancies that may have accumulated over time by reconciling the differences between the two data sets. This can be done by overwriting the position information of the objects in the composite image with the position information converted from the single images. As another example, in response to a matching score of the tracked objects being lowered below a predetermined value, the object tracker 140 may perform an operation for correcting the position information. The matching score of an object refers to a value obtained by comparing the identity of a pattern of the objects which are being tracked across image frames. For example, the object tracker 140 may calculate a correlation value of the pixels representing the objects which are being tracked across multiple single image frames and obtain the matching score that represents how likely it is that the objects tracked in the multiple frames are in fact the same object.

The information generator 150 may generate object information on each of the detected objects by using the extracted feature information about the objects, the tracked position information, and the like. By way of example, the object information may include at least one of a gaze direction, an age, a gender, a race, an ethnicity, an emotion, an attention time, and a dwell time (i.e., a time of staying within a recognition area) of an object.

The information generator 150 may collect information on the objects at predetermined time intervals to generate integrated information. The integrated information may be transmitted to an external apparatus through the communicator 110. As an example, the information extracting apparatus 100 may determine which advertisement or information is suitable for a recognition area based on the generated object information. In particular, if the object information indicates that the recognition area is occupied by a senior citizen, it may be determined that an advertisement that targets a more mature audience may be appropriate for display at the recognition area. As another example, instead of the information extracting apparatus 100, the external apparatus may receive the object information and determine suitability of the object information.

The storage 160 may store one or more software applications and/or data necessary for the operations of the information extracting apparatus 100. For example, the information extracting apparatus 100 may determine a corresponding relation between a position in the plurality of single images and a position in the stitched image by using the mapping table stored in the storage 160. In addition, the storage 160 may include a read-only memory (ROM) and/or a random-access memory (RAM). As commonly known in the art, the ROM may transmit data and commands to a central processing unit (CPU) uni-directionally, while the RAM may transmit the data and commands to the CPU bi-directionally.

The manipulation input interface 170 may enable the information extracting apparatus 100 to receive commands from a user. For example, the manipulation input interface 170 may be implemented with a keypad, a touch screen, a remote controller, a mouse, a joystick, a motion sensor, a microphone, and so on. If the manipulation input interface 170 is a device that requires a display, for example, a touch screen, the manipulation input interface 170 may be combined with the display 180 in the same device or housing. For example, the manipulation input interface 170 may receive a user command to transmit information on the objects to the external apparatus or correct the position information on the tracked objects.

The display 180 may display the extracted object information. In addition, the display 180 may display the plurality of single images or composite image. For example, if the display 180 is located at or in the vicinity of the recognition area, the display 180 may display an advertisement selected based on the analysis of the extracted object information. According to an aspect of an exemplary embodiment, the display 180 may be omitted.

The display 180 may be designed as various types of display panels. That is, the display 180 may be implemented with one or more of diverse display technologies, such as, liquid crystal display (LCD), organic light-emitting diode (OLED), electronic paper (E-paper), plasma display panel (PDP), cathode ray tube (CRT), vacuum fluorescent display (VFD), field emission display (FED), electroluminescent display (ELD), and the like. The display panel typically may be implemented with a light-emitting type display, but does not exclude reflective type displays. In addition, the display 180 may be a flexible display or a transparent display.

The controller 190 may control the overall operations of the information extracting apparatus 100. The controller 190 may include one or more CPUs, one or more modules for controlling the information extracting apparatus 100, and ROM and RAM for storing data.

As an example, the controller 190 may generate a clock signal for controlling a timing of transmitting the object information to the external apparatus or a timing of correcting the position information in the composite image. As another example, the controller 190 may perform a relay function for transmitting the position information on the objects and matching table information between the components of the information extracting apparatus 100.

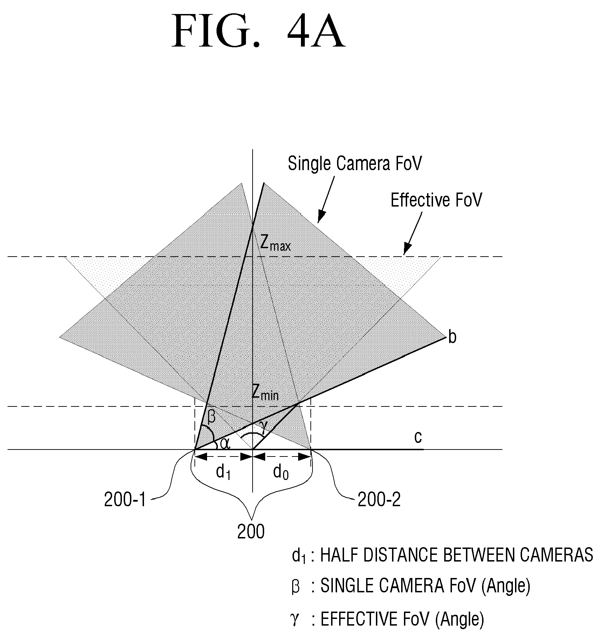

FIG. 4A is an illustration of arraying a plurality of photographing apparatuses 200 according to an aspect of an exemplary embodiment such that photographed images generated by the plurality of photographing apparatuses 200 may overlap each other. In order to generate a stitched or composite image, a plurality of single images share one or more overlapping portions, that is, a part of the photographed area that is captured in more than one single image in an overlapping manner. For example, as illustrated in FIG, 4, two photographing apparatuses 200 may be arrayed. In FIG. 4A, a field of view (FoV) of a single photographing apparatus is $\beta$, and the two photographing apparatus are arrayed so as to face different directions in a crossing manner. An enlarged recognition area is an effective FoV angle $\gamma$, based on a halfway point of the two photographing apparatuses 200. A minimum recognition distance is $Z_{min}$, and a maximum recognition distance is $Z_{max}$, each represented by a respective dotted line.

Once the recognition area of the information extracting system 1000 is determined by the values of ($\gamma$, $Z_{min}$, $Z_{max}$), an angle ($\angle tilt$) at which the plurality of photographing apparatuses 200 are tilted so as to face each other is determined. The tilt angle ($\angle tilt$) may represent how much each of the plurality of photographing apparatuses 200 is to be rotated from its front-facing orientation, where the "front" in this example is the direction that is facing at a 90° angle from the line that passes through the plurality of photographing apparatuses 200. Although photographing apparatus 200-1 and photographing apparatus 200-2 are shown as having the same tilt angle in FIG. 4A, they are not limited to have the same tilt angle and may each have different tilt angle. The tilt angle may be expressed as Formula 1 as below:

[Formula 1]

$$\angle tilt = \alpha_0 - \alpha$$

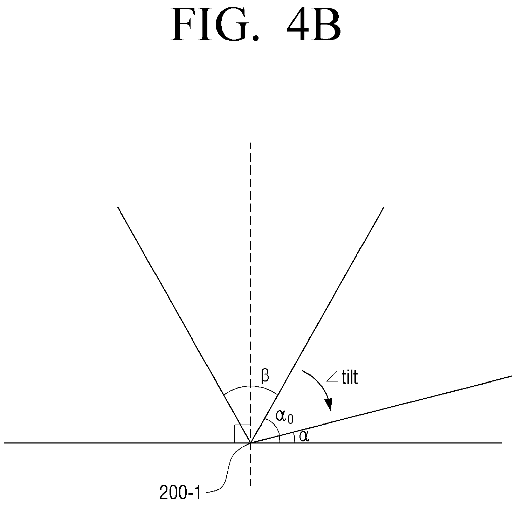

In this formula, $\angle tilt$ represents an angle at which the plurality of photographing apparatuses 200 are tilted or rotated so as to face each other. In addition, $\alpha$ represents an angle at which one photographing apparatus 200-1 is tilted with respect to a horizontal line where the plurality of photographing apparatuses 200. The plurality of photographing apparatuses 200 are arrayed in such a way that allows the plurality of photographing apparatuses 200 to photograph an object at a position that is spaced at least a minimum recognition distance $Z_{min}$ away from the horizontal line that passes through the plurality of photographing apparatuses 200. FIG. 4B provides additional insights into the relationships among the different angles $\alpha$, $\alpha_0$, $\beta$, and $\angle tilt$. The photographic apparatus 200-1 is shown as having a FoV angle of $\beta$ and facing forward. Angle $\alpha_0$ may represent an $\alpha$ value when

the photographic apparatus 200-1 is not tilted towards the photographic apparatus 200-2 (i.e., tilt angle is 0). Thus, in FIG. 4A, angle $\alpha$ may be expressed as Formula 2 as below:

[Formula 2]

$$\alpha = \tan^{-1}\left(\frac{Z_{min}}{d_0 + d_1}\right)$$

In Formula 2, $Z_{min}$ represents the minimum recognition distance of the photographic apparatuses 200. In addition, $d_0$ and $d_1$ each represent a respective distance from the plurality of photographing apparatuses 200 to a point where each of the plurality of photographing apparatuses 200-1, 200-2 determine the effective FoV ($\gamma$) of the plurality of photographing apparatuses 200. For example, if the point where the effective FoV angle $\gamma$ is determined is located at a halfway point between the plurality of photographing apparatuses 200, then $d_0$ and $d_1$ may be equal. However, in other aspects, $d_0$ and $d_1$ can have different values from each other.

Meanwhile, $d_0$ may be expressed as Formula 3 when $d_0 = d_1$, by using the minimum recognition distance $Z_{min}$ and the effective FoV $\gamma$.

[Formula 3]

$$d_0 = \frac{Z_{min}}{\tan\left(\frac{\pi}{2} - 0.5 \times \gamma\right)}$$

In addition, $\alpha_0$, which represents an $\alpha$ value when a tilt angle is 0, may be expressed as Formula 4 as below:

[Formula 4]

$$\alpha_0 = (\pi - \beta)/2$$

In Formula 4, $\beta$ represents a field of view (FoV) of a single photographing apparatus.

Now, Formula 1 may be rewritten as Formula 5 by using Formula 2 and Formula 4 as below:

[Formula 5]

$$\angle tilt = \frac{\pi - \beta}{2} - \tan^{-1}\left(\frac{Z_{min}}{d_0 + d_1}\right)$$

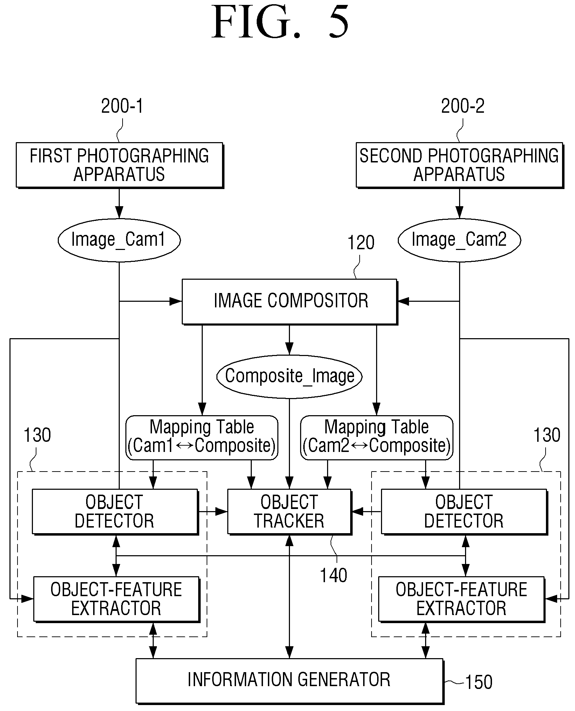

Hereinafter, the operations of the information extracting apparatus 100 will be described in further detail with reference to FIGS. 5 to 10.

FIG. 5 is a block diagram illustrating an operation of an information extracting apparatus 100 according to an aspect of an exemplary embodiment. A detailed description on information transmitted between the components of the information extracting apparatus 100 will be provided with reference to FIG. 5.

A first single image (Image_Cam1) and a second single image (Image_Cam2) received from a first photographing apparatus 200-1 and a second photographing apparatus 200-2, respectively, may be transmitted to an image compositor 120. The image compositor 120 may generate a composite image (Composite_Image) by stitching together the plurality of received single images.

In response to the composite image being generated, the image compositor 120 may determine which pixels of the composite image correspond to which pixels of the respective single images, or which pixels of the respective single images correspond to which pixels of the composite image. Information on the pixels may be stored in respective mapping tables 510-1 and 510-2 (collectively "510"). A separate mapping table can be generated for each single image such that the mapping table can store the pixel correlation data between that single image and the composite image.

An object detector 130 may detect objects in the received images and extract feature information about the detected objects. However, as illustrated in FIG. 5, detecting objects and extracting feature information may be each handled by separate modules within the object detector 130. The object detector 130 may determine whether objects are present by analyzing the respective single images. When it is determined that the objects are present in the single images, the object detector 130 may convert a position of the objects in the single images into a position in composite image by using the mapping table 510 and transmit the converted position to an object tracker 140. According to an aspect of an exemplary embodiment, there can be one or more objector detectors 130. In other words, each photographing apparatus may be coupled to a dedicated object detector. Alternatively, one object detector can process all the single images that are received from the plurality of photographing apparatuses 200.

The object tracker 140 may track the positions of the various objects by using the composite image. Based on the positions of the objects identified in the single images, as determined by the object detector 130 at regular or predetermined time intervals, the object tracker 140 may make corrections to the positions of the objects in the composite image if necessary. Accordingly, the object tracker 140 may remove any errors or positional discrepancies which may accumulate over time while the objects are being tracked.

The object tracker 140 may transmit the position information on the tracked objects to the object detector 130. The object detector 130 may extract the feature information on the objects by analyzing the respective single images and the position information on the tracked objects. For example, the feature information on the objects may include at least one of a gaze direction, an age, a gender, a race, an ethnicity, an emotion, an attention time, and a time for staying at a recognition area (dwell time) of an object.

The extracted feature information on the objects and the position information on the tracked objects may be collected at an information generator 150. The information generator 150 may generate object information by using the collected information. Thus, the object information may include the detected objects, their positions or locations in the recognition area, their characteristics and features, and so forth. The information generator 150 may transmit the generated object information to an external apparatus on a regular basis or on demand.

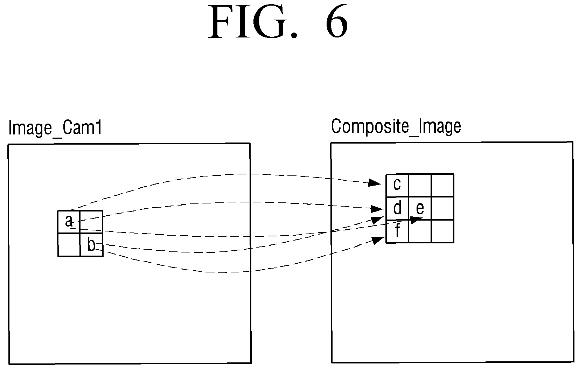

FIG. 6 is an illustration of an operation of generating a mapping table by identifying corresponding pixel positions while generating a composite image by stitching together a plurality of single images.

For example, as illustrated in FIG. 6, Pixel a in a first single image (Image_Cam1) may correspond to Pixels c, d, and e in a composite image (Composite_Image). Similarly, Pixel b in the first single image may correspond to Pixels d and f in the composite image. The correlation between the pixels in the single images and the pixels in the composite image may not always be a one-to-one relationship because one pixel can be mapped to two or more pixels and vice versa. The image compositor 120 may store the matching relations of the pixels in a mapping table.

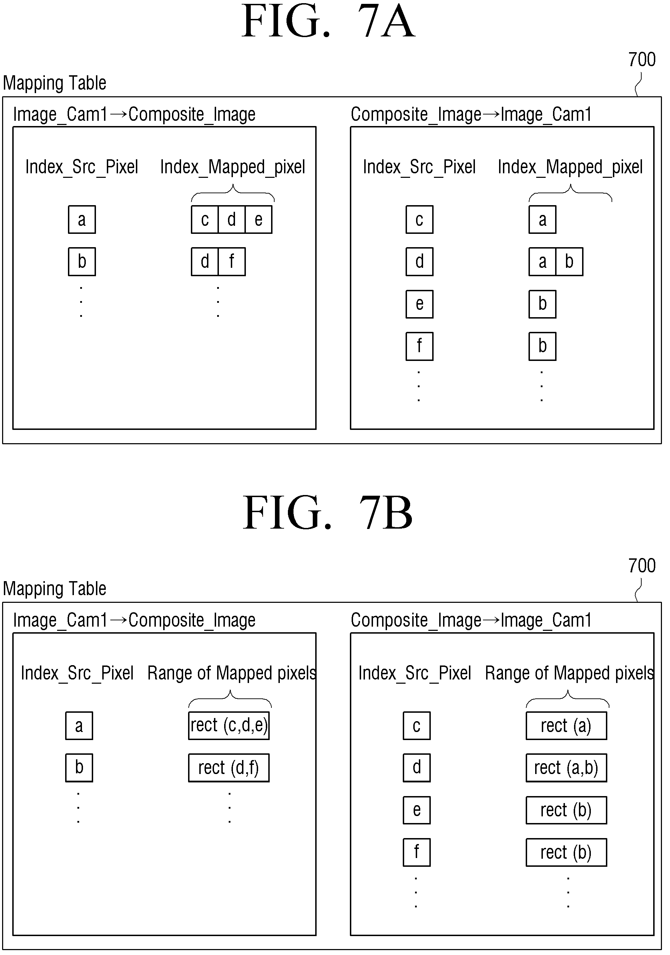

FIGS. 7A and 7B are illustrations of mapping tables. For example, referring to FIG. 7A, a mapping table 700 may store mapping relations between pixels of the first single image (Image_Cam1) and pixels of the composite image (Composite_Image) as shown in FIG. 6. That is, the exemplary mapping table 700 of FIG. 7A displays which pixels of the composite image correspond to which pixels of the single image, and conversely, which pixels of the single image correspond to which pixels of the composite image. By way of example, Pixel a in the first single image may correspond to Pixels c, d, and e in the composite image. In addition, Pixel d in the composite image may correspond to Pixel b in the first single image. Each pixel in the mapping table 700 may be represented by a set of coordinates, such as the pixel's x and y coordinates. The pixels may also be represented by their index values. By storing and referring to these bi-directional mappings in the mapping table 700, an information extracting apparatus 100 may reduce the amount of computations necessary for stitching subsequent image frames on to the existing composite image.

Referring to FIG. 7B, a mapping table 700 may represent and store mapped pixels grouped in a rectangular area instead of the pixels' individual x and y coordinate values or index values of the entire mapped pixels. Recording every pixel-to-pixel mapping information in the mapping table 700 may increase memory usage and computational requirements for looking up pixel correspondence. Thus, by mapping a pixel to a range of pixels, a range of pixels to a pixel, or a range of pixels to another range of pixels, the information extracting apparatus 100 may reduce the memory usage and computational cost associated with using the mapping table 700. The range of pixels may correspond to a rectangle, a square, a circle, an oval, or other shapes. In other words, the mapping table may store a corresponding relation between a pixel area in the plurality of single images and a pixel area in the composite image.

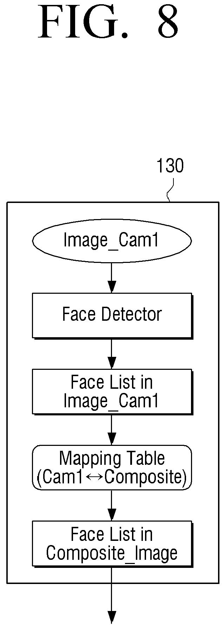

FIGS. 8 to 10 are block diagrams illustrating an operation of an object detector 130 in greater detail. Hereinafter, the operation of the object detector 130 will be described by taking an example of a person object.

FIG. 8 is a block diagram illustrating an operation of detecting a new object in a single image. Referring to FIG. 8, the object detector 130 may detect a position of a face in the single image by using a face detection (FD) unit. The detected position of the face is a position in the single image, and thus, the object detector 130 may convert the detected position into a position within a composite image by using a mapping table. Subsequently, the object detector 130 may transmit information regarding the converted position to an object tracker 140.

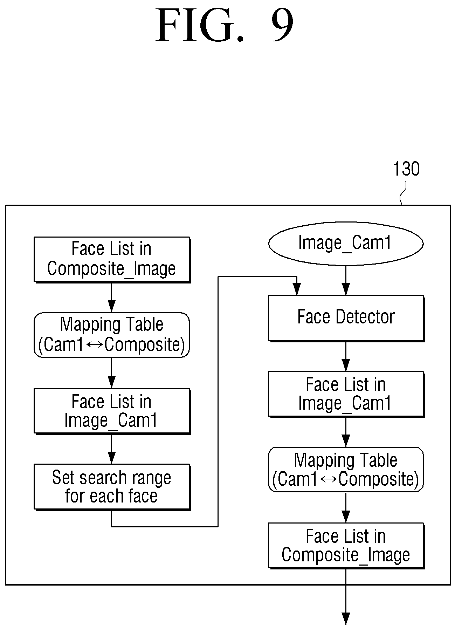

FIG. 9 is a block diagram illustrating an operation of correcting an error which occurs in a process of tracking an object. Referring to FIG. 9, an object detector 130 may receive position information on a face in a composite image from an object tracker 140. In addition, the object detector 130 may obtain position information related to a single image by converting the position information of the composite image into position information of the single image by using a mapping table. Subsequently, the object detector 130 may set a search range around the position of the face in the single image and re-determine the position of the face in the single image. The object detector 130 may transmit the re-determined position of the face to the object tracker 140 by converting the position information related to the single image into the position information related to the composite image. Accordingly, an information extracting apparatus 100 may correct an error which occurs in the process of tracking an object. Namely, the newly acquired position information obtained from the single image (and now converted to the position information of the face within the composite image) may override the previously available position information of the face in the composite image.

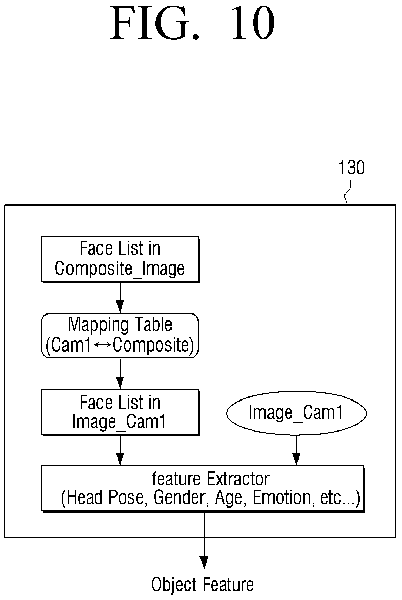

FIG. 10 is a block diagram illustrating an example of an operation of extracting feature information on objects in an object detector 130. Referring to FIG, 10, the object detector 130 may receive position information on the tracked object in a composite image from an object tracker 140. Subsequently, the object detector 130 may convert the received position information into position information in a single image by using a mapping table. Thus, the object detector 130 may determine the position of the object more accurately by using the position information and extract diverse feature information on the objects.

As another example, the object detector 130 may extract the feature information on the objects during the operation of detecting the objects and perform only a tracking operation for accurately counting the number of objects though the object tracker 140. According to this embodiment, the object detector 130" does not need to receive the position information on the objects in the composite image after tracking the objects in order to extract the feature information on the objects.

According to the various aspects of exemplary embodiments as discussed above, when a large number of people are present in an overlapping portion of a plurality of single images or a person is moving at a high speed, feature information on the object may be extracted more accurately without being affected by image distortion, and the possibility of failing to track the object may be reduced though the information extracting apparatus 100.

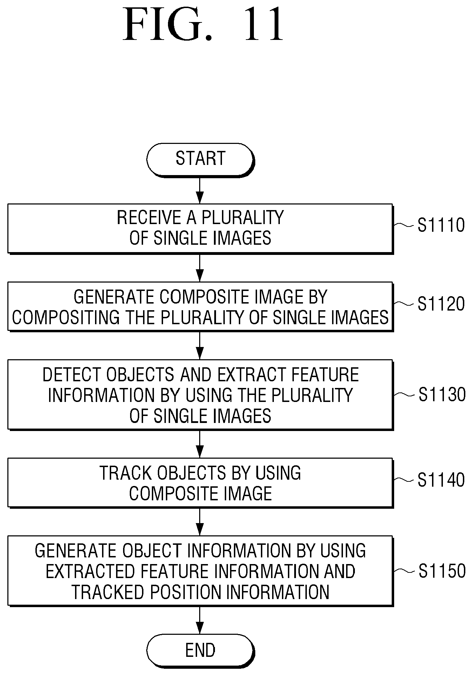

FIG. 11 is a flowchart provided to describe a method for extracting information of an information extracting apparatus 100 according to an aspect of an exemplary embodiment. The steps outlined herein are exemplary and can be implemented in any combination thereof, including combinations that exclude, add, or modify certain steps.

Referring to FIG. 11, an information extracting apparatus may receive a plurality of single images from an external apparatus in operation S1110. Subsequently, the information extracting apparatus may generate a composite image by stitching the plurality of single images in operation S1120. The information extracting apparatus may generate the composite image and generate a mapping table for storing corresponding relations between pixels in the plurality of single images and pixels in the composite image. The mapping table may store a corresponding relation of a coordinate value or index information of each pixel, or may store a corresponding relation by converting an area where the pixels are distributed into a range of mapped pixels.

The information extracting apparatus may detect objects by using the plurality of single images and extract feature information on the objects in operation S1130. According to an aspect of an exemplary embodiment, the information extracting apparatus may detect objects by using the plurality of single images, receive position information on the objects in the composite image after tracking the objects, convert the received position information into position information in the single images, and extract feature information on the objects by using the converted position information.

The information extracting apparatus may track the detected objects by using the generated composite image in operation S1140. In particular, the information extracting apparatus may convert the position information on the objects detected in the plurality of single images into the position information in the composite image by using a mapping table. Subsequently, the information extracting apparatus may track the objects in the composite image by using the converted position information.

The information extracting apparatus may correct the position information on the objects which are being tracked in the composite image. The correction of the position information may be performed at predetermined time intervals or performed in response to a mapping score of the tracked objects dropping below a predetermined value.

To be specific, the information extracting apparatus may detect the position information in the single images by using the current position information on the tracked object in the composite image and the mapping table. Subsequently, the information extracting apparatus may set a search range based on the detected position in the single images and determine an accurate current pixel position on the objects. The information extracting apparatus may correct the position of the objects in the composite image by using the accurate current position information on the objects determined in the single image and the mapping table.

The information extracting apparatus may generate object information by using the extracted feature information and the tracked position information on the objects in operation S1150. For example, the feature information on the objects may include at least one of a gaze direction, an age, a gender, a race, an ethnicity, an emotion, an attention time, a dwell time (i.e., a time for staying at a recognition area), a shape, a color, a size, and/or a speed of an object. The information extracting apparatus may transmit the generated object information to an external apparatus at predetermined time intervals or on demand.

According to the above-described methods for extracting information, a broad range of recognition area may be supported. In addition, deterioration of recognition performance may be reduced and the object information may be extracted with high fidelity.

Meanwhile, a program code for executing the method for extracting information according to the above-described various embodiments may be stored in diverse types of recording media. To be specific, the program code may be stored in various types of machine-readable recording media, such as, RAM, flash memory, ROM, Electrically Erasable Read-Only Memory (EEROM), Electrically Erasable and Programmable Read-Only Memory (EEPROM), register, hard disk, removable disk, memory card, Universal Serial Bus (USB) memory, Compact Disc Read-Only Memory (CD-ROM), and the like.

The foregoing embodiments and advantages are merely exemplary and are not to be construed as limiting the present inventive concept. The present teaching can be readily applied to other types of devices. Also, the description of the embodiments is intended to be illustrative, and not to limit the scope of the claims, and many alternatives, modifications, and variations will be apparent to those skilled in the art.

**Claims**

1. An information extracting system comprising:

   a plurality of photographing apparatuses;
   an information extracting apparatus configured to extract information on objects included in a plurality of single images respectively photographed by the plurality of photographing apparatuses; and
   a server configured to receive and store feature information on the objects from the information extracting apparatus,
   wherein the information extracting apparatus is configured to generate a composite image by compositing the plurality of single images received from the plurality of photographing apparatuses, detect the objects included in the plurality of single images, extract feature information on each of the objects, track a position of the each of the objects in the composite image, and generate object information on the objects by using the feature information and the position of the each of the objects.

2. An information extracting apparatus comprising:

   a communicator configured to receive a plurality of single images;
   an image compositor configured to generate a composite image by compositing the plurality of single images;
   an object detector configured to detect objects included in the plurality of single images and extract feature information on the objects;
   an object tracker configured to track, in the composite image, respective positions of the objects; and
   an information generator configured to generate object information on the objects by using the feature information and the respective positions of the objects.

3. The apparatus as claimed in claim 2, wherein the image compositor is further configured to generate a mapping table for storing a corresponding relation between a first pixel position in the plurality of single images and a second pixel position in the composite image.

4. The apparatus as claimed in claim 2, wherein the image compositor is further configured to generate a mapping table configured to convert a group of pixels associated with each of the objects into a pixel area, the mapping table storing a corresponding relation between a first pixel area in the plurality of single images and a second pixel area in the composite image.

**5.** The apparatus as claimed in claim 3, wherein the object tracker is further configured to convert first position information on the objects detected in the plurality of single images into second position information on the objects in the composite image by using the mapping table, and track the objects by using the second position information.

**6.** The apparatus as claimed in claim 3, wherein the object detector is further configured to obtain current positions of the objects in the plurality of single images by converting, via the mapping table, the respective positions of the objects in the composite image, and
wherein the object tracker is further configured to correct position information of the objects in the composite image by using the current positions of the objects in the plurality of single images and the mapping table.

**7.** The apparatus as claimed in claim 6, wherein the object tracker corrects the position information in the composite image at predetermined time intervals.

**8.** The apparatus as claimed in claim 3, wherein the object detector is further configured to convert first position information on the objects being tracked in the composite image into second position information in the plurality of single images by using the mapping table, and extract feature information on the objects by using the second position information.

**9.** The apparatus as claimed in claims 2 to 8, wherein the feature information comprises at least one of a gaze direction, an age, a gender, a race, an ethnicity, an emotion, a shape, a color, a size, and a speed of the objects.

**10.** The apparatus as claimed in claims 2 to 9, wherein the communicator is further configured to transmit the object information to an external apparatus at predetermined time intervals.

**11.** A method comprising:

receiving a plurality of single images;
generating a composite image by compositing the plurality of single images;
detecting an object included in the plurality of single images;
tracking a position of the object in the composite image;
extracting feature information on the object from the plurality of single images; and
generating object information on the object by using the feature information and the position of the object.

**12.** The method as claimed in claim 11, further comprising:

generating a mapping table for storing a corresponding relation between a first pixel position in the plurality of single images and a second pixel position in the composite image.

**13.** The method as claimed in claim 12, wherein the mapping table converts a group of pixels associated with the object into a pixel area, the mapping table storing a corresponding relation between a first pixel area in the plurality of single images and a second pixel area in the composite image.

**14.** The method as claimed in claim 12, wherein the tracking comprises:

converting first position information of the object in the plurality of single images into second position information in the composite image by using the mapping table; and
tracking the object by using the second position information.

**15.** The method as claimed in claim 12, further comprising:

detecting a current position of the object in the plurality of single images by converting, via the mapping table, position information of the object in the composite image; and
correcting the position information in the composite image by using the current position of the object in the plurality of single images and the mapping table.

# FIG. 1

1000

# FIG. 2

<u>100</u>

110 → COMMUNICATOR → 120 IMAGE COMPOSITOR → 140 OBJECT TRACKER

130 OBJECT DETECTOR → 150 INFORMATION GENERATOR

# FIG. 3

<u>100</u>

190 CONTROLLER

110 — COMMUNICATOR

120 — IMAGE COMPOSITOR

130 — OBJECT DETECTOR

140 — OBJECT TRACKER

INFORMATION GENERATOR — 150

STORAGE — 160

MANIPULATION INPUT INTERFACE — 170

DISPLAY — 180

# FIG. 4A

Single Camera FoV

Effective FoV

$Z_{max}$

b

$Z_{min}$

β α γ

c

$d_1$ $d_0$

200-1 200-2

200

$d_1$ : HALF DISTANCE BETWEEN CAMERAS

β : SINGLE CAMERA FoV (Angle)

γ : EFFECTIVE FoV (Angle)

# FIG. 4B

# FIG. 5

# FIG. 6

Image_Cam1

Composite_Image

# FIG. 7A

700

Mapping Table

**Image_Cam1→Composite_Image**

Index_Src_Pixel    Index_Mapped_pixel

| a | | c | d | e |

| b | | d | f |

:
:

**Composite_Image→Image_Cam1**

Index_Src_Pixel    Index_Mapped_pixel

| c | | a |

| d | | a | b |

| e | | b |

| f | | b |

:
:

# FIG. 7B

700

Mapping Table

**Image_Cam1→Composite_Image**

Index_Src_Pixel    Range of Mapped pixels

| a | | rect (c,d,e) |

| b | | rect (d,f) |

:
:

**Composite_Image→Image_Cam1**

Index_Src_Pixel    Range of Mapped pixels

| c | | rect (a) |

| d | | rect (a,b) |

| e | | rect (b) |

| f | | rect (b) |

:
:

# FIG. 8

130

```
Image_Cam1
    ↓
Face Detector
    ↓
Face List in
Image_Cam1
    ↓
Mapping Table
(Cam1↔Composite)
    ↓
Face List in
Composite_Image
    ↓
```

# FIG. 9

130

Face List in
Composite_Image

↓

Mapping Table
(Cam1↔Composite)

↓

Face List in
Image_Cam1

↓

Set search range
for each face

Image_Cam1

↓

Face Detector

↓

Face List in
Image_Cam1

↓

Mapping Table
(Cam1↔Composite)

↓

Face List in
Composite_Image

# FIG. 10

130

Face List in
Composite_Image

↓

Mapping Table
(Cam1↔Composite)

↓

Face List in
Image_Cam1

Image_Cam1

↓

feature Extractor
(Head Pose, Gender, Age, Emotion, etc...)

↓

Object Feature

# FIG. 11

START

RECEIVE A PLURALITY
OF SINGLE IMAGES — S1110

GENERATE COMPOSITE IMAGE BY
COMPOSITING THE PLURALITY OF SINGLE IMAGES — S1120

DETECT OBJECTS AND EXTRACT FEATURE
INFORMATION BY USING THE PLURALITY
OF SINGLE IMAGES — S1130

TRACK OBJECTS BY USING
COMPOSITE IMAGE — S1140

GENERATE OBJECT INFORMATION BY USING
EXTRACTED FEATURE INFORMATION AND
TRACKED POSITION INFORMATION — S1150

END

Europäisches
Patentamt

European
Patent Office

Office européen
des brevets

# EUROPEAN SEARCH REPORT

Application Number

EP 16 16 4100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Josi Cesi ET AL: "Tracking of multiple moving objects on the unit sphere using a multiple-camera system on a mobile robot", , 27 April 2014 (2014-04-27), XP55317643, Retrieved from the Internet: URL:http://across.fer.hr/_download/reposit ory/clanak.pdf [retrieved on 2016-11-09] * abstract * * sec. 2, par. 1; figure 1 * * sec. 3, par. 4 * | 1-15 | INV. G06K9/00 |
| X | A. ESS ET AL: "Object Detection and Tracking for Autonomous Navigation in Dynamic Environments", THE INTERNATIONAL JOURNAL OF ROBOTICS RESEARCH, vol. 29, no. 14, 1 December 2010 (2010-12-01), pages 1707-1725, XP055170047, ISSN: 0278-3649, DOI: 10.1177/0278364910365417 * abstract; figure 1 * * sec. 3 and sec. 4 * | 1-15 | |
| A | XINDING SUN ET AL: "Region of interest extraction and virtual camera control based on panoramic video capturing", IEEE TRANSACTIONS ON MULTIMEDIA., vol. 7, no. 5, 1 October 2005 (2005-10-01) , pages 981-990, XP055310933, US ISSN: 1520-9210, DOI: 10.1109/TMM.2005.854388 * the whole document * | 1-15 | TECHNICAL FIELDS SEARCHED (IPC) G06K |

-/--

The present search report has been drawn up for all claims

| Place of search | Date of completion of the search | Examiner |
|---|---|---|
| The Hague | 10 November 2016 | Mitzel, Dennis |

Europäisches
Patentamt

European
Patent Office

Office européen
des brevets

# EUROPEAN SEARCH REPORT

Application Number

EP 16 16 4100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATIL R ET AL: "People detection and tracking in high resolution panoramic video mosaic", INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, vol. 2, 28 September 2004 (2004-09-28), pages 1323-1328, XP010765843, DOI: 10.1109/IROS.2004.1389579 ISBN: 978-0-7803-8463-7 * the whole document * | 1-15 | |
| A | EP 1 677 534 B1 (MICROSOFT CORP [US]) 14 May 2014 (2014-05-14) * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 10 November 2016 | Mitzel, Dennis |

EPO FORM 1503 03.82 (P04C01)

## ANNEX TO THE EUROPEAN SEARCH REPORT
## ON EUROPEAN PATENT APPLICATION NO.

EP 16 16 4100

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2016

| Patent document cited in search report | | Publication date | Patent family member(s) | | Publication date |
|---|---|---|---|---|---|
| EP 1677534 | B1 | 14-05-2014 | CN | 1837952 A | 27-09-2006 |
| | | | EP | 1677534 A1 | 05-07-2006 |
| | | | JP | 4890005 B2 | 07-03-2012 |
| | | | JP | 2006191535 A | 20-07-2006 |
| | | | KR | 20060079079 A | 05-07-2006 |
| | | | US | 2005151837 A1 | 14-07-2005 |

EPO FORM P0459

For more details about this annex : see Official Journal of the European Patent Office, No. 12/82

**REFERENCES CITED IN THE DESCRIPTION**

**Patent documents cited in the description**

- KR 1020150090906